# EUROPÄISCHE PATENTSCHRIFT

(11) **EP 2 873 066 B1**
(45) Veröffentlichungstag und Bekanntmachung des Hinweises auf die Patenterteilung: **10.10.2018**
(21) Anmeldenummer: 13733314.2
(22) Anmeldetag: 03.07.2013
(51) Int. Cl.: G08G 1/01, B60W 30/00, B62D 15/02, B60W 30/10, B60W 30/16

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF POUR DIRIGER UN VÉHICULE

(30) Priorität: 12.07.2012 DE 102012212175
(43) Veröffentlichungstag der Anmeldung: 20.05.2015
(73) Patentinhaber: Robert Bosch GmbH, 70442 Stuttgart (DE)
(72) Erfinder: HILLENBRAND, Stefan, 71696 Moeglingen (DE)
(86) Internationale Anmeldenummer: PCT/EP2013/064002
(87) Internationale Veröffentlichungsnummer: WO 2014/009214

(56) Entgegenhaltungen:
- EP-A1- 2 423 902
- WO-A1-2007/145564
- WO-A1-2011/081609
- DE-A1-102007 027 495
- GB-A- 2 358 506

## Beschreibung

Die Erfindung betrifft ein Verfahren und eine Vorrichtung zum Betreiben eines Fahrzeugs. Die Erfindung betrifft ferner ein Computerprogramm.

### Stand der Technik

Aus der Offenlegungsschrift DE 10 2008 025 707 A1 sind ein Verfahren und eine Vorrichtung zum Bestimmen einer Verkehrsführungsinformation für ein Fahrzeug bekannt. Hierbei werden Positions- und Zeitdaten eines weiteren Fahrzeugs in einer Umgebung des Fahrzeugs erfasst. Die erfassten Positions- und Zeitdaten werden zu dem Fahrzeug übertragen. Aus den empfangenen Positions- und Zeitdaten des weiteren Fahrzeugs wird dann eine Verkehrsführungsinformation für das Fahrzeug bestimmt. Hierbei kann vorgesehen sein, dass die Verkehrsführungsinformation einem Fahrerassistenzsystem des Fahrzeugs bereitgestellt wird. Das Fahrerassistenzsystem des Fahrzeugs kann aufgrund der ihm zur Verfügung gestellten Verkehrsführungsinformation eine Geschwindigkeit des Fahrzeugs an den vor dem Fahrzeug liegenden Straßenverlauf anpassen.

Die Offenlegungsschrift WO 2007/145564 A1 zeigt ein Verfahren und eine Vorrichtung zur Verwendung in einem automatischen Spurhaltesystem, um einen lateralen Fahrzeugabstand zu einem weiteren Fahrzeug im Bedarfsfall vergrößern zu können.

Die Offenlegungsschrift DE 10 2007 027495 A1 zeigt ein Verfahren zur Unterstützung des Fahrers eines Kraftfahrzeugs bei der Querführung des Kraftfahrzeugs.

Die Offenlegungsschrift EP 2 423 902 A1 zeigt ein Sicherheitssystem und ein entsprechendes Verfahren.

Die Offenlegungsschrift GB 2 358 506 A zeigt eine Kommunikation von Fahrzeuginformationen zwischen mehreren Fahrzeugen.

### Offenbarung der Erfindung

Die der Erfindung zugrunde liegende Aufgabe kann darin gesehen werden, ein Verfahren zum Betreiben eines Fahrzeugs anzugeben, das eine effiziente und effektive Fahrzeugführung und Verkehrsführung ermöglicht.

Die der Erfindung zugrunde liegende Aufgabe kann auch darin gesehen werden, eine entsprechende Vorrichtung bereitzustellen.

Die der Erfindung zugrunde liegende Aufgabe kann ferner darin gesehen werden, ein entsprechendes Computerprogramm anzugeben.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Verfahren zum Betreiben eines sich auf einer Fahrbahn bewegenden Fahrzeugs bereitgestellt. Es wird ein Verkehrsfluss von weiteren Fahrzeugen im Umfeld des Fahrzeugs erfasst wird. Wenn der erfasste Verkehrsfluss einem Verkehrsstau entspricht, wird eine Querführung des Fahrzeugs geregelt wird, um einen lateralen Abstand zwischen dem Fahrzeug und einem der weiteren Fahrzeuge zu verringern.

Nach einem anderen Aspekt wird eine Vorrichtung zum Betreiben eines Fahrzeugs bereitgestellt. Die Vorrichtung umfasst einen Empfänger zum Empfangen eines extern von dem Fahrzeug ausgesandten Regelungsbefehls , wobei eine Regelung zum Regeln einer Querführung abhängig von dem empfangenen Regelungsbefehl vorgesehen ist, um einen lateralen Abstand zwischen dem Fahrzeug und einem weiteren Fahrzeug im Umfeld des Fahrzeugs zu verringern.

Nach noch einem Aspekt wird ein Computerprogramm bereitgestellt, welches Programmcode zur Durchführung des Verfahrens zum Betreiben eines sich auf einer Fahrbahn bewegenden Fahrzeugs umfasst, wenn das Computerprogramm in einem Computer ausgeführt wird.

Dadurch, dass im Fall eines Verkehrsstaus der laterale Abstand zwischen den beiden Fahrzeugen automatisch verringert wird, wird in vorteilhafter Weise mehr Platz auf der Fahrbahn geschaffen, welcher beispielsweise durch Rettungsfahrzeuge genutzt werden kann. Auch ist es so in vorteilhafter Weise ermöglicht, dass das Fahrzeug automatisch um ein Hindernis, beispielsweise eine Baustelle oder ein Unfall, das den Verkehrsstau ausgelöst hat, herumgeleitet werden kann.

Aufgrund des automatischen Regelns der Querführung des Fahrzeugs während des Verkehrsstaus kann die Fahrzeugführung betreffend adäquat auf den Verkehrsstau reagiert werden, üblicherweise besser als es ein menschlicher Fahrer in der Regel könnte.

Ein Verkehrsstau im Sinne der vorliegenden Erfindung kann auch als ein Stau bezeichnet werden und bezeichnet in der Regel einen stark stockenden oder zum Stillstand gekommenen Verkehrsfluss auf einer Fahrbahn. Das heißt also insbesondere, dass eine Anzahl von Fahrzeugen pro Zeiteinheit oder pro Streckenlänge größer als ein vorbestimmter Schwellenwert ist. Insbesondere liegt ein Stau dann vor, wenn der Verkehr, also die Fahrzeuge, mit einer Geschwindigkeit von kleiner als 40 km/h, insbesondere kleiner als 20 km/h, vorzugsweise kleiner als 12 km/h, fließt. Der Begriff Verkehrsstau, wie er vorliegend verwendet wird, umfasst sowohl den zum Stillstand gekommenen Verkehrsfluss als auch den stark stockenden Verkehrsfluss.

Querführung im Sinne der vorliegenden Erfindung bedeutet, dass ein Lenkwinkel des Fahrzeugs verändert wird.

Eine Fahrbahn im Sinne der vorliegenden Erfindung umfasst insbesondere eine oder mehrere Fahrstreifen bzw. Fahrspuren, die mittels Fahrstreifenmarkierungen von einander abgegrenzt sind. Ferner umfasst eine Fahrbahn in der Regel insbesondere Fahrbahnmarkierungen zur Abgrenzung der Fahrbahn von einem Standstreifen oder einem Parkstreifen.

Der laterale Abstand zwischen zwei Fahrzeugen bezeichnet insbesondere die minimale Distanz zwischen den beiden Fahrzeugen, wenn diese relativ zu ihrer Längsrichtung nebeneinander angeordnet sind.

Nach einer Ausführungsform kann vorgesehen sein, dass eine jeweilige Querführung der weiteren Fahrzeuge geregelt wird, um einen jeweiligen lateralen Abstand zwischen den Fahrzeugen einzustellen, so dass sich mehr Fahrzeuge nebeneinander auf der Fahrbahn bewegen als vor Beginn der Regelung. Dadurch wird in vorteilhafter Weise bewirkt, dass eine vorhandene Breite der Fahrbahn effizienter ausgenutzt wird. Es können folglich mehr Fahrzeuge einen bestimmten Streckenabschnitt passieren. Ein Verkehrsfluss kann erhöht werden, so dass der Stau schneller aufgelöst werden kann.

So kann insbesondere vorgesehen sein, dass im Fall einer Fahrbahn mit mehreren Fahrspuren und entsprechenden Fahrstreifenmarkierungen und Fahrbahnmarkierungen, diese Markierungen bei der Regelung ignoriert werden, also nicht berücksichtigt werden. Das heißt also insbesondere, dass die Fahrzeuge die Markierungen überfahren können bzw. über diesen sich bewegen.

Hier ist es in der Regel so, dass üblicherweise in einer Nicht-Stau-Situation, also wenn kein Verkehrsstau vorliegt, bekannte Fahrerassistenzsysteme lediglich darauf ausgelegt sind, die Fahrzeuge innerhalb der Markierungen führen. Es wird also als Folge der Regelung und des Ignorierens eine zusätzliche Fahrspur aufgemacht bzw. gebildet, also zusätzlich zu den bereits mittels der Fahrstreifenmarkierungen von einander abgegrenzten Fahrspuren.

Da in der Regel Fahrstreifen ausreichend breit gewählt werden, um einen ausreichenden lateralen Abstand zwischen den Fahrzeugen zu gewährleisten, steht ein ausreichender Sicherheitsabstand zur Verfügung, welcher nun dafür genutzt wird, dass noch mindestens ein weiteres Fahrzeug zusätzlich auf der Fahrbahn geführt werden kann in seitlicher Richtung.

In einer weiteren Ausführungsform kann vorgesehen sein, dass eine jeweilige Querführung der weiteren Fahrzeuge geregelt wird, um einen jeweiligen lateralen Abstand zwischen den Fahrzeugen einzustellen, so dass bei einer Reduzierung einer für die Bewegung der Fahrzeuge vorgesehenen Breite der Fahrbahn eine Anzahl von sich nebeneinander bewegenden Fahrzeugen nach Beginn der Regelung gleich oder größer wird als eine Anzahl von sich nebeneinander bewegenden Fahrzeugen vor Beginn der Regelung.

Solch eine Reduktion kann sich beispielsweise durch eine Sperrung einer Fahrspur aufgrund einer Baustelle oder eines Unfalls ergeben. Obwohl jetzt eigentlich eine Fahrspur weniger zur Verfügung steht, wird dies dadurch kompensiert, dass aufgrund des entsprechenden Einstellens eines jeweiligen lateralen Abstands zwischen den Fahrzeugen, die Anzahl von sich nebeneinander bewegenden Fahrzeugen zumindest konstant bleibt, vorzugsweise sich erhöht, nachdem mit der Regelung begonnen wurde und/oder insbesondere nach dem örtlichen Beginn der Sperrung bzw. der Startposition der reduzierten Breite.

In einer weiteren Ausführungsform kann vorgesehen sein, dass die Regelung abhängig von einem Parameter, insbesondere mehreren Parametern, ausgewählt aus der folgenden Gruppe von Parametern durchgeführt wird: eine kinematische Größe eines Fahrzeugs, Status eines Fahrtrichtungsanzeigers eines Fahrzeugs, Status einer Bremsleuchte eines Fahrzeugs, geometrische Breite eines Fahrzeugs, Breite der Fahrbahn.

Eine kinematische Größe im Sinne der vorliegenden Erfindung bezeichnet insbesondere eine physikalische Größe, welche eine jeweilige Bewegung der Fahrzeuge beschreiben kann. Beispielsweise kann die kinematische Größe eine Position, eine Geschwindigkeit oder eine Beschleunigung, auch eine negative Beschleunigung, also eine Verzögerung, eines Fahrzeugs sein. Bei der kinematischen Größe kann es sich beispielsweise um die momentane kinematische Größe handeln. Das heißt also insbesondere, dass eine momentane Position, eine momentane Geschwindigkeit oder eine momentane Beschleunigung eines Fahrzeugs erfasst wird. Vorzugsweise kann vorgesehen sein, dass die kinematische Größe eine voraussichtliche kinematische Größe ist. Das heißt also insbesondere, dass es sich hier um eine kinematische Größe handelt, die das Fahrzeug voraussichtlich in der Zukunft aufweisen wird. Es kann sich also vorzugsweise um die voraussichtliche Position des Fahrzeugs, um die voraussichtliche Geschwindigkeit des Fahrzeugs oder um die voraussichtliche Fahrzeugbeschleunigung bzw. Beschleunigung des Fahrzeugs handeln.

In einer Ausführungsform kann vorgesehen sein, dass Parameter zwischen den Fahrzeugen ausgetauscht werden. Das heißt also insbesondere, dass Parameter, die das jeweilige Fahrzeug betreffen, zu den weiteren Fahrzeugen gesendet werden und von diesen empfangen werden. Die Fahrzeuge sind also insbesondere untereinander hinsichtlich einer Kommunikation vernetzt und kommunizieren insofern untereinander. Eine solche Kommunikation ist insbesondere unter dem feststehenden Begriff Car-to-Car (C2C)- Kommunikation bekannt.

Nach einer anderen Ausführungsform kann vorgesehen sein, dass zusätzlich zur Regelung der Querführung eine Längsführung des Fahrzeugs bzw. der Fahrzeuge geregelt wird. Die im Zusammenhang mit der Regelung der Querführung genannten und noch zu nennenden Ausführungen gelten analog für die Regelung der Längsführung.

In einer weiteren Ausführungsform kann vorgesehen sein, dass die Regelung abhängig von einem jeweiligen von den Fahrzeugen empfangenen Regelungsbefehl durchgeführt wird, der mittels eines extern von den Fahrzeugen angeordneten Leitrechners an die Fahrzeuge gesendet wird. Eine solche Kommunikation zwischen Fahrzeugen und dem Leitrechner als feststehende Infrastruktur kann auch als eine C2I (Car to Infrastructure)-Kommunikation bezeichnet werden.

In einer Ausführungsform kann vorgesehen sein, dass eine Kommunikationseinrichtung vorgesehen ist, die ausgebildet ist, mit einem weiteren Fahrzeug und/oder dem Leitrechner zu kommunizieren. Die Kommunikationseinrichtung umfasst also vorzugsweise einen Sender und Empfänger zwecks Austauschs von Parameter bzw. Empfang von Regelungsbefehlen. Vorzugsweise umfasst jedes der Fahrzeuge eine Kommunikationseinrichtung.

Ein Regelungsbefehl umfasst insbesondere Informationen darüber, wie die konkrete Regelung seitens der Fahrzeuge ausgeführt werden muss. Der Regelungsbefehl wird insbesondere basierend auf Parametern gebildet, die von den Fahrzeugen an den Leitrechner gesendet werden. Das heißt also, dass die Fahrzeuge ihre Parameter vorzugsweise an den Leitrechner senden können. Vorzugsweise wird der Regelungsbefehl basierend auf weiteren Information bzw. Verkehrsdaten gebildet wie beispielsweise einer Freigabe seitens der Polizei oder Feuerwehr, ob ein Standstreifen zur Fahrt verwendet werden darf oder nicht.

In einer Ausführungsform kann vorgesehen sein, dass der Regelungsbefehl aus der folgenden Gruppe von Regelungsbefehlen ausgewählt wird: Startbefehl zum Initiieren der Regelung, Stoppbefehl zum Stoppen der Regelung, Fortführungsbefehl zum Fortführen der Regelung nach einem Stoppen der Regelung.

Der Leitrechner empfängt also üblicherweise Verkehrsdaten, welche einen Verkehr bzw. einen Verkehrsfluss entlang der Fahrstrecke des Fahrzeugs beschreiben. Die Verkehrsdaten umfassen also insbesondere Informationen über einen möglichen Stau bzw. einen möglichen stockenden Verkehr. Verkehrsdaten umfassen insbesondere Informationen über Hindernisse, Unfälle oder Baustellen entlang der Fahrstrecke.

Basierend auf den Verkehrsdaten und den empfangenen Parametern kann der Leitrechner eine optimale Strategie für eine Regelung der Querführung und/oder der Längsführung der Fahrzeuge bilden und entsprechend Regelungsbefehle an die Fahrzeuge senden. Diese regeln dann basierend darauf die Querführung und Längsführung.

Somit ist es beispielsweise in vorteilhafter Weise ermöglicht, dass vorzugsweise in bestimmten Abschnitten der Fahrbahn, beispielsweise von einer Einfahrt bis zu einer Unfallstelle am Stauanfang, ausreichend Platz für Rettungsfahrzeuge bleibt.

In einer Ausführungsform kann vorgesehen sein, dass die Parameter mittels einer Erfassungseinrichtung erfasst wird. Eine Erfassungseinrichtung kann beispielsweise einen oder mehrere Sensoren umfassen. Zum Erfassen einer Position kann beispielsweise ein GPS-Sensor vorgesehen sein. GPS steht hier für Global Positioning System. Weitere Sensoren sind beispielsweise Radgeschwindigkeits-, Beschleunigungs-, Lenkwinkel- und Drehratensensoren. Solche Sensoren sind üblicherweise in Systemen zur Regelung der Fahrdynamik und Fahrstabilität bereits verbaut und erfassen sensorisch die Fahrzeugeigenbewegung. Weitere vorteilhafte Sensoren sind beispielsweise Videosensoren, Radarsensoren, Ultraschallsensoren oder Lidarsensoren. Solche Sensoren sind üblicherweise in Fahrerassistenzsysteme bereits eingebaut und erfassen sensorisch ein Umfeld des Fahrzeugs. Basierend auf den entsprechenden Sensorsignalen können dann die Parameter gebildet werden.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Fahrzeugs,
- Fig. 2: eine Vorrichtung zum Betreiben eines Fahrzeugs,
- Fig. 3: eine Fahrbahn mit Fahrzeugen und
- Fig. 4: eine weitere Fahrbahn mit Fahrzeugen.

Im Folgenden werden für gleiche Merkmale gleiche Bezugszeichen verwendet.

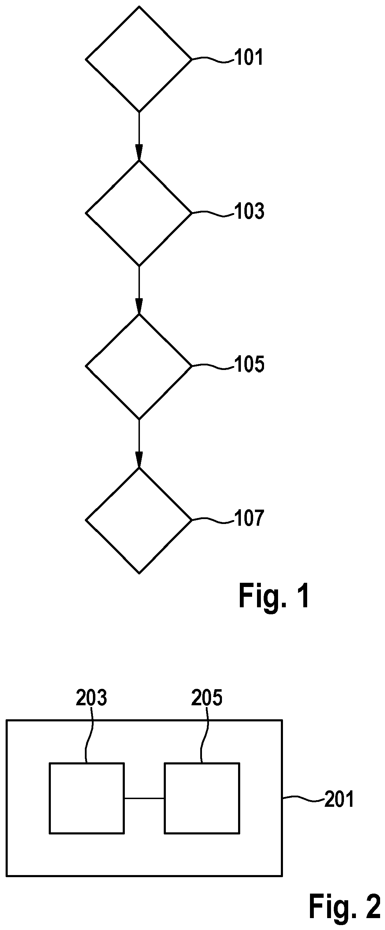

Fig. 1 zeigt ein Ablaufdiagramm eines Verfahrens zum Betreiben eines Fahrzeugs, das sich auf einer Fahrbahn bewegt.

In einem Schritt 101 wird ein Verkehrsfluss von weiteren Fahrzeugen im Umfeld des Fahrzeugs erfasst wird Wenn der erfasste Verkehrsfluss einem Verkehrsstau entspricht, wird gemäß einem Schritt 103 ein Regelungsbefehl umfassend einen Startbefehl von einem Leitrechner an das Fahrzeug und an die weiteren Fahrzeuge gesendet. In einem Schritt 105 wird daraufhin mit einer Regelung einer Querführung des Fahrzeugs begonnen, um einen lateralen Abstand zwischen dem Fahrzeug und einem der weiteren Fahrzeuge zu verringern. In einem Schritt 107 ist vorgesehen sein, dass auch die weiteren Fahrzeuge mit einer jeweiligen Regelung ihrer Querführung beginnen, um einen jeweiligen lateralen Abstand zwischen den Fahrzeugen einzustellen, so dass insbesondere die Fahrzeuge enger als vor Beginn der Regelung fahren, so dass in vorteilhafter Weise eine zusätzliche Fahrspur gebildet wird.

Fig. 2 zeigt eine Vorrichtung 201 zum Betreiben eines Fahrzeugs (nicht gezeigt).

Die Vorrichtung 201 umfasst einen Empfänger 203 zum Empfangen eines extern von dem Fahrzeug ausgesandten Regelungsbefehls. Ferner ist eine Regelung 205 zum Regeln einer Querführung abhängig von dem empfangenen Regelungsbefehl vorgesehen, um einen lateralen Abstand zwischen dem Fahrzeug und einem weiteren Fahrzeug im Umfeld des Fahrzeugs zu verringern.

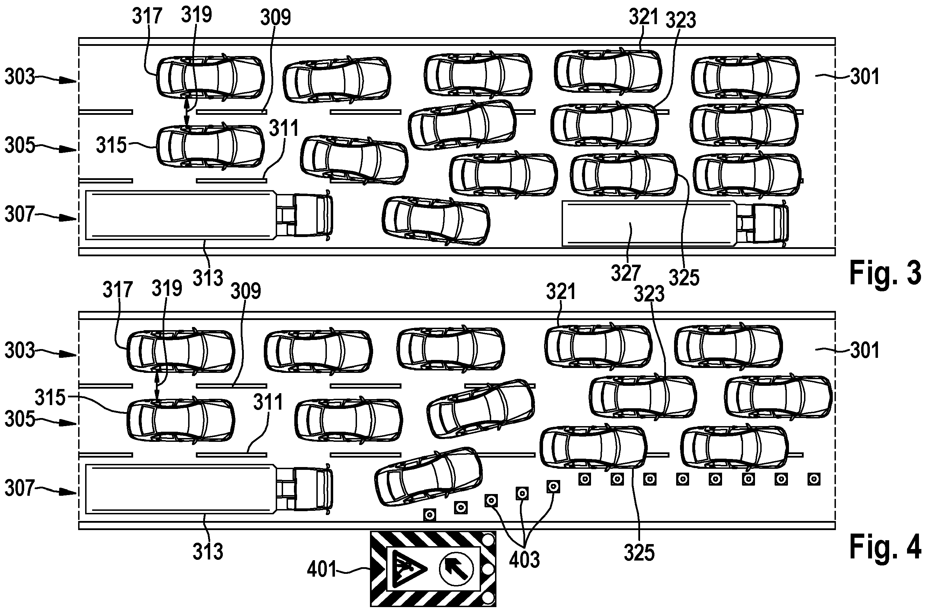

Fig. 3 zeigt eine Fahrbahn 301.

Die Fahrbahn 301 weist drei nebeneinander angeordnete Fahrstreifen 303, 305 und 307 auf. Es sind Fahrstreifenmarkierungen 309 und 311 vorgesehen, welche die drei Fahrstreifen 303, 305 und 307 voneinander abgrenzen.

Von links kommend sind drei Fahrzeuge 313, 315 und 317 eingezeichnet, welche nach rechts auf der Fahrbahn fahren. Hierbei fahren die drei Fahrzeuge 313, 315 und 317 jeweils auf einem eigenen Fahrstreifen 307, 305 und 303. Ein lateraler Abstand zwischen den beiden Fahrzeugen 315, 317 ist mittels eines Doppelpfeils mit dem Bezugszeichen 319 gekennzeichnet.

Des Weiteren sind noch weitere Fahrzeuge eingezeichnet, welche ebenfalls auf der Fahrbahn 301 fahren. Der Übersicht halber ist nicht jedes der Fahrzeuge mit einem eigenen Bezugszeichen gekennzeichnet.

Beispielhaft soll mittels dieser Fahrzeuge ein Stau dargestellt sein.

Es ist nun vorgesehen, dass jedes der Fahrzeuge Parameter wie beispielsweise seine momentane Fahrzeugposition und seine momentane Fahrzeuggeschwindigkeit als kinematische Größe erfasst und an die anderen Fahrzeuge und an einen Leitrechner (nicht gezeigt) sendet. Die anderen Fahrzeuge empfangen diese Parameter und können entsprechend ihre Querführung regeln. Hierbei umfasst das Regeln der jeweiligen Querführung der Fahrzeuge ein Regeln eines jeweiligen lateralen Abstandes 319 relativ von einem Fahrzeug zu einem weiteren Fahrzeug. Es ist vorgesehen, dass ein lateraler Abstand verringert wird. Das bewirkt in vorteilhafter Weise, dass nun auf der Fahrbahn 301 vier Fahrzeuge 321, 323, 325, 327 nebeneinander Platz finden, sodass die vorhandene Fahrbahnbreite effizienter ausgenutzt werden kann. Es können also mehr Fahrzeuge zur gleichen Zeit einen bestimmten Streckenabschnitt passieren im Vergleich zu dem Fall, dass pro Fahrstreifen 303, 305 und 307 jeweils ein einzelnes Fahrzeug fährt.

Hier ist insbesondere vorgesehen, dass mit der Regelung erst begonnen wird, wenn der Leitrechner einen Startbefehl ausgesandt hat und dieser von den Fahrzeugen empfangen wurde. Der Leitrechner initiiert also die Regelung bzw. das engere Fahren im Stau. Vorzugsweise ist vorgesehen, dass der Leitrechner Regelungsbefehle an die Fahrzeuge sendet, die die Information umfassen, dass die Fahrzeuge so eng bzw. dicht nebeneinander fahren sollen, dass dadurch eine weitere Fahrspur aufgemacht bzw. gebildet wird.

Bei der Regelung der Querführung ist insbesondere vorgesehen, dass die Fahrzeuge die Fahrstreifenmarkierungen 309 und 311 ignorieren, sodass sie die Fahrstreifenmarkierung 309 und 311 zumindest teilweise überlappend überfahren.

Es ist also vorgesehen, dass aufgrund der Regelung mehr als die ursprünglich vorgesehenen Fahrstreifen 303, 305, 307 genutzt werden im Fall eines Staus oder eines stockenden Verkehrsflusses.

Fig. 4 zeigt die Fahrbahn 301 mit mehreren Fahrzeugen. Es werden die gleichen Bezugszeichen wie in Fig. 3 verwendet. Die entsprechenden Ausführungen gelten analog für die Fig. 4

Als ein Unterschied zu Fig. 3 ist in Fig. 4 ein Warnschild 401 eingezeichnet, welches die Fahrer der Fahrzeuge vor einer Baustelle warnt. Hierfür sind mehrere Leitkegel 403 vorgesehen, welche den Fahrstreifen 307 sperren. Insofern müssen sich die Fahrzeuge, welche sich auf der Fahrspur 307 befinden, in den weiteren Fahrstreifen 303 und 305 einordnen. Ein solches Einordnen wird in der Regel nach einem Reißverschlussverfahren durchgeführt.

In der in Fig. 4 gezeigten Verkehrssituation ist nun insbesondere vorgesehen, dass der Leitrechner Regelungsbefehle an die Fahrzeuge sendet, die die Information umfassen, dass die Fahrzeuge so dicht bzw. eng nebeneinander fahren sollen, dass trotz des gesperrten Fahrstreifens 307 immer noch drei Fahrzeuge nebeneinander auf der Fahrbahn 301 fahren können, sodass in vorteilhafter Weise trotz der gebildeten Verengung aufgrund der Leitkegel 403 eine Zahl der effektiv genutzten Fahrstreifen nicht reduziert werden muss.

Zusammenfassend umfasst die Erfindung also insbesondere den Gedanken, dass vorzugsweise bei einer Vernetzung von Fahrzeugen untereinander, d. h. also, dass die Fahrzeuge Parameter empfangen und aussenden, diese bei einer vollautomatischen Fahrt ihren lateralen Abstand untereinander derart optimieren, insbesondere verringern, dass auf einer vorhanden Fahrbahnbreite mehr Fahrzeuge nebeneinander angeordnet werden können. Insbesondere kann diese Regelung auch von einem Leitrechner koordiniert werden. Dieser weiß in der Regel darüber Bescheid, ob noch Platz für eine Rettungsgasse für Rettungsfahrzeuge benötigt wird oder nicht. Wenn der Platz für die Rettungsgasse nicht benötigt wird, werden die Fahrzeuge nicht mehr innerhalb der Fahrspurmarkierungen geführt, sodass effektiv mehr Fahrspuren bzw. Fahrstreifen benutzt werden können. Insbesondere hat der Leitrechner auch Kenntnis über die Fahrbahnbreite und kann basierend darauf entsprechende Regelungsbefehle für die Fahrzeuge bilden. Insbesondere kann vorgesehen sein, dass der Leitrechner das Regeln der Querführung initiiert.

Aufgrund der Regelung geht keine Fahrspur verloren, sodass eine Staulänge und ein Zeitverlust für Verkehrsteilnehmer reduziert werden. Es findet ein automatisches enges Fahren im Stau oder in einem stockenden Verkehrsfluss statt.

## Patentansprüche

1. Verfahren zum Betreiben eines sich auf einer Fahrbahn (301) bewegenden Fahrzeugs (313), wobei ein Verkehrsfluss von weiteren Fahrzeugen (315) im Umfeld des Fahrzeugs erfasst (101) wird und wobei, wenn der erfasste Verkehrsfluss einem Verkehrsstau entspricht, eine Querführung des Fahrzeugs (313) geregelt (105) wird, indem ein Lenkwinkel des Fahrzeugs verändert wird, um einen lateralen Abstand zwischen dem Fahrzeug (313) und einem der weiteren Fahrzeuge (315) zu verringern.

2. Verfahren nach Anspruch 1, wobei eine jeweilige Querführung der weiteren Fahrzeuge (315) geregelt (107) wird, um einen jeweiligen lateralen Abstand zwischen den Fahrzeugen einzustellen, so dass sich mehr Fahrzeuge nebeneinander auf der Fahrbahn (301) bewegen als vor Beginn der Regelung.

3. Verfahren nach Anspruch 1 oder 2, wobei eine jeweilige Querführung der weiteren Fahrzeuge (315) geregelt (107) wird, um einen jeweiligen lateralen Abstand zwischen den Fahrzeugen einzustellen, so dass bei einer Reduzierung einer für die Bewegung der Fahrzeuge vorgesehenen Breite der Fahrbahn eine Anzahl von sich nebeneinander bewegenden Fahrzeugen nach Beginn der Regelung gleich oder größer wird als eine Anzahl von sich nebeneinander bewegenden Fahrzeugen vor Beginn der Regelung.

4. Verfahren nach einem der vorherigen Ansprüche, wobei die Regelung abhängig von einem Parameter ausgewählt aus der folgenden Gruppe von Parametern durchgeführt wird: eine kinematische Größe eines Fahrzeugs, Status eines Fahrtrichtungsanzeigers eines Fahrzeugs, Status einer Bremsleuchte eines Fahrzeugs, geometrische Breite eines Fahrzeugs, Breite der Fahrbahn (301).

5. Verfahren nach Anspruch 4, wobei Parameter zwischen den Fahrzeugen ausgetauscht werden

6. Verfahren nach einem der vorherigen Ansprüche, wobei die Regelung abhängig von einem jeweiligen von den Fahrzeugen empfangenen Regelungsbefehl durchgeführt wird, der mittels eines extern von den Fahrzeugen angeordneten Leitrechners an die Fahrzeuge gesendet (103) wird.

7. Verfahren nach Anspruch 6, wobei der Regelungsbefehl aus der folgenden Gruppe von Regelungsbefehlen ausgewählt wird: Startbefehl zum Initiieren der Regelung, Stoppbefehl zum Stoppen der Regelung, Fortführungsbefehl zum Fortführen der Regelung nach einem Stoppen der Regelung.

8. Verfahren nach Anspruch 6 oder 7 soweit rückbezogen auf Anspruch 4, wobei der Parameter an den Leitrechner gesendet wird, welcher basierend auf dem Parameter den Regelungsbefehl bildet.

9. Vorrichtung (201) zum Betreiben eines Fahrzeugs (313), umfassend einen Empfänger (203) zum Empfangen eines extern von dem Fahrzeug ausgesandten Regelungsbefehls , wobei eine Regelung (205) zum Regeln einer Querführung abhängig von dem empfangenen Regelungsbefehl vorgesehen ist, indem ein Lenkwinkel des Fahrzeugs verändert wird, um einen lateralen Abstand zwischen dem Fahrzeug (313) und einem weiteren Fahrzeug (315) im Umfeld des Fahrzeugs (313) zu verringern.

10. Computerprogramm, umfassend Programmcode zur Durchführung des Verfahrens nach einem der Ansprüche 1 bis 8, wenn das Computerprogramm in einem Computer ausgeführt wird.

## Claims

1. Method for operating a vehicle (313) which moves on an underlying surface (301), wherein a flow of traffic of other vehicles (315) is detected (101) in the surroundings of the vehicle, and wherein, if the detected flow of traffic corresponds to a traffic jam, lateral guidance of the vehicle (313) is regulated (105), in that a steering angle of the vehicle is changed in order to reduce a lateral distance between the vehicle (313) and one of the other vehicles (315).

2. Method according to Claim 1, wherein respective lateral guidance of the other vehicles (315) is regulated (107) in order to set a respective lateral distance between the vehicles, with the result that more vehicles move one next to the other on the underlying surface (301) than at the start of the regulating process.

3. Method according to Claim 1 or 2, wherein respective lateral guidance of the other vehicles (315) is regulated (107) in order to set a respective lateral distance between the vehicles, with the result that in the event of a reduction of a width of the underlying surface which is provided for the movement of the vehicles a number of vehicles which are moving one next to the other after the start of the regulating process becomes equal to or larger than a number of vehicles which are moving one next to the other before the start of the regulating process.

4. Method according to one of the preceding claims, wherein the regulating process is carried out having been selected as a function of a parameter from the following group of parameters: a kinetic variable of a vehicle, status of a direction of travel indicator of a vehicle, status of a brake light of a vehicle, geometric width of a vehicle, width of the underlying surface (301).

5. Method according to Claim 4, wherein parameters are exchanged between the vehicles.

6. Method according to one of the preceding claims, wherein the regulating process is carried out as a function of a respective regulating command which is received by the vehicles and which is transmitted (103) to the vehicles by means of a host computer which is arranged externally with respect to the vehicles.

7. Method according to Claim 6, wherein the regulating command is selected from the following group of regulating commands: start command for initiating the regulating process, stop command for stopping in the regulating process, continue command for continuing the regulating process after stopping the regulating process.

8. Method according to Claim 6 or 7, in this respect referred back to Claim 4, wherein the parameter is transmitted to the host computer which forms the regulating command on the basis of the parameter.

9. Device (201) for operating a vehicle (313), comprising a receiver (203) for receiving a regulating command which is emitted externally with respect to the vehicle, wherein a regulating process (205) for regulating lateral guidance is provided as a function of the received regulating command in that a steering angle of the vehicle is changed in order to reduce a lateral distance between the vehicle (313) and another vehicle (315) in the surroundings of the vehicle (313).

10. Computer program comprising program code for carrying out the method according to one of Claims 1 to 8 when the computer program is executed in a computer.

## Revendications

1. Procédé pour faire fonctionner un véhicule (313) se déplaçant sur une voie de circulation (301), un flux de trafic d'autres véhicules (315) dans l'environnement du véhicule étant détecté (101) et lorsque le flux de trafic correspond à un embouteillage, un guidage transversal du véhicule (313) étant réglé (105) en modifiant un angle de direction du véhicule afin de réduire une distance latérale entre le véhicule (313) et l'un des autres véhicules (315).

2. Procédé selon la revendication 1, dans lequel un guidage transversal respectif des autres véhicules (315) est réglé (107) afin d'ajuster une distance latérale respective entre les véhicules de telle sorte que davantage de véhicules se déplacent les uns à côté des autres sur la voie de circulation (300) qu'avant le début du réglage.

3. Procédé selon la revendication 1 ou 2, dans lequel un guidage transversal respectif des autres véhicules (315) est réglé (107) afin d'ajuster une distance latérale respective entre les véhicules, de telle sorte que dans le cas d'une réduction d'une largeur de la voie de circulation prévue pour le déplacement des véhicules, un nombre de véhicules se déplaçant les uns à côté des autres après le début du réglage soit identique ou supérieur à un nombre de véhicules se déplaçant les uns côté des autres avant le début du réglage.

4. Procédé selon l'une quelconque des revendications précédentes, dans lequel le réglage est effectué en fonction d'un paramètre choisi parmi le groupe suivant de paramètres : une grandeur cinématique d'un véhicule, l'état d'un clignotant d'un véhicule, l'état d'un voyant de frein d'un véhicule, la largeur géométrique d'un véhicule, la largeur de la voie de circulation (301).

5. Procédé selon la revendication 4, dans lequel des paramètres sont échangés entre les véhicules.

6. Procédé selon l'une quelconque des revendications précédentes, dans lequel le réglage est effectué en fonction d'un ordre de réglage reçu par l'un respectif des véhicules, qui est envoyé (103) aux véhicules au moyen d'un ordinateur maître disposé à l'extérieur des véhicules.

7. Procédé selon la revendication 6, dans lequel l'ordre de réglage est choisi à partir du groupe suivant d'ordres de réglage : ordre de démarrage pour amorcer le réglage, ordre d'arrêt pour arrêter le réglage, ordre de poursuite pour poursuivre leur réglage après un arrêt du réglage.

8. Procédé selon la revendication 6 ou 7, dans la mesure où elles se rapportent à la revendication 4, dans lequel le paramètre est envoyé à l'ordinateur maître qui forme l'ordre de réglage sur la base du paramètre.

9. Dispositif (201) pour faire fonctionner un véhicule (313), comprenant un récepteur (203) pour recevoir un ordre de réglage envoyé à l'extérieur du véhicule, un réglage (205) pour régler un guidage transversal en fonction de l'ordre de réglage reçu étant prévu, un angle de direction du véhicule étant modifié pour réduire une distance latérale entre le véhicule (313) et un autre véhicule (315) dans l'environnement du véhicule (313).

10. Programme informatique, comprenant un code de programme pour mettre en oeuvre le procédé selon l'une quelconque des revendications 1 à 8, lorsque le programme informatique est exécuté dans un ordinateur.
